# EUROPEAN PATENT SPECIFICATION

(11) **EP 2 679 922 B1**
(45) Date of publication and mention of the grant of the patent: **07.06.2023**
(21) Application number: 13189788.6
(22) Date of filing: 22.10.2013
(51) Int. Cl.: F24F 3/00, F25B 30/00, F24F 5/00, F24F 1/0007, F24F 1/0059, F24F 13/22, F24F 12/00

(54) **Heat pump system and air-conditioner**
Wärmepumpensystem und Klimaanlage
Système de pompe à chaleur et climatiseur

(30) Priority: 16.08.2013 CN 201310358748
(43) Date of publication of application: 01.01.2014
(73) Proprietor: Guangxi Junfuhuang Building Environment Technology Co., Ltd., Nanning (CN); Guangxi University, Guangxi 530004 (CN)
(72) Inventor: Hu, Yingning, 530004 Nanning Guangxi (CN); Qin, Wenqi, 530004 Nanning Guangxi (CN); Wang, Yan, 530004 Nanning Guangxi (CN); Lei, Jun, 530004 Nanning Guangxi (CN)
(74) Representative: Hirsch & Associés

(56) References cited:
- WO-A1-2012/099141
- WO-A1-2013/026206
- WO-A1-2013/176211
- JP-A- 2006 214 696
- US-A- 3 220 212
- US-A- 3 292 388
- US-A- 5 267 450
- US-A1- 2010 198 414
- US-B1- 6 263 690

## Description

### FIELD OF THE INVENTION

The present application relates to an air-conditioner, and in particular, to a heat pump system according to claim 1 and an air-conditioner according to claim 3.

### BACKGROUND OF THE INVENTION

The air-conditioner generally refers herein to a room air conditioner, and specifically is a set for providing conditioned air into a room (or an enclosed space or area). Most of conventional air-conditioners perform cooling or heating in the room in convective heat-transfer manner. Specifically, a fan coil may serve as the terminal unit of an air-conditioner. A fan is provided in the fan coil in advance. Air in the region of the fan coil is circulated continuously under the action of the fan. The air is cooled or heated after flowing through a refrigerant coil or a hot-water (or chilled-water) coil, thereby cooling or heating the room. Because cooling or heating is achieved in the convective heat-transfer manner, the indoor temperature is not uniform. Either cooling or heating, the indoor temperature difference is generally greater than 10 degrees centigrade, even more than 20 degrees centigrade. Part of the cool or hot airflow is too large, which results in uncomfortableness of a human body, local cold, or even illness.

In order to solve the above problem, a radiation coil is adopted at the terminal of air-conditioner. The radiation coil is provided therein with chilled water (or hot water), and is arranged on the surface structure of the building (the ceiling surface or the ground surface). The chilled water (or hot water) in the radiation coil cools or heats a particular area in radiating manner. Such a structure of air-conditioner achieves the uniform cooling or heating to a certain extent, however, the water circulation loop of the radiation coil is required to exchange heat with a heat exchanger in a refrigerant loop of an air-conditioner firstly, and then exchange heat with
the indoor air, thereby adding an intermediate heat exchange procedure and increasing the energy consumption of a power apparatus for delivering water circulation, for example, a circulating pump. Thus, the efficiency of heat exchange is low, and the installation of the system is complex.

In conclusion, it is desirable for the person skilled in the art to improve the efficiency of heat exchange.

US3220212 A discloses an air conditioning unit, which includes a substantially flat box-shaped casing having side- and end walls, an upper wall and a bottom wall, means for connecting the interior of the casing with an external air reservoir and means for conveying an air flow derived from said external air reservoir through the interior of the casing, a heat pump system within the casing including a compressor, at least two heat exchangers and pipes interconnecting the compressor and the heat exchangers and forming a circuit for circulating a refrigerant through the compressor and heat exchangers, at least one of said heat exchangers being arranged in heat exchange relation with said air flow, and at least one other heat exchanger being arranged in heat exchange relation with a radiant heating and cooling panel subjacent the bottom wall of the said casing.

WO2012099141 A discloses that an air conditioner, which is provided with a refrigerant circuit having a compressor, an indoor heat exchanger, a radiant heat exchanger, a pressure reduction mechanism, and an outdoor heat exchanger. The indoor heat exchanger is disposed inside an indoor unit in such a manner as to face an indoor fan, and the radiant heat exchanger is disposed on the outer surface of the indoor unit. In addition, the air conditioner has an indoor electrically-operated valve for adjusting the amount of refrigerant supplied to the radiant heat exchanger. The air conditioner is controlled in such a manner that, when a refrigerant is flushed through the indoor heat exchanger to carry out warm-air heating, and the refrigerant is flushed through the radiant heat exchanger to carry out radiant heating, the opening of the indoor electrically-operated valve becomes larger after the frequency of the compressor drops.

US5267450 A discloses an air conditioning apparatus including an indoor device having a first heat exchanger, a second heat exchanger, and a radiant panel. Air circulation mode is switched to radiant mode when a room temperature has reached a temperature set by a user. Refrigerant is changeably circulated through the first and second heat exchangers in a cooling operation so that dew is not formed on the radiant panel.

US3292388 A discloses a radiant heating or cooling system, which includes a combined radiant heating, cooling and ventilation sub-ceiling including a plurality of pipes and a plurality of plate 115 elements in heat exchange association with said pipes, wherein the pipes of the subceiling are inserted in the secondary circuit of a liquid-to-liquid heat exchanger, the primary circuit of which contains a reversible heat 120 pump comprising a compressor, an expansion valve and an air-to-liquid heat exchanger, the components of said heat pump being enclosed in a compartment communicating with the atmosphere and comprising means for causing an air-current derived from the atmosphere to flow through said compartment.

US6263690 B1 discloses a heat pump system according to the preamble of claim 1.

### SUMMARY OF THE INVENTION

In view of the above fact, there are provided according to the present application a heat pump system and an air-conditioner which may increase the efficiency of heat exchange. In order to achieve the above objects, the following technical solutions are set forth in the present application.

A heat pump system includes a main heat pump system, and a directly expanded strong cool-heat radiation plate provided on a building surface and serving as the terminal of the main heat pump system. The directly expanded strong cool-heat radiation plate is configured to allow refrigerant in the main heat pump system to circulate therein. A heat retaining layer and a reflecting layer are provided on the building surface, and wherein the reflecting layer is provided on an outside surface of the heat retaining layer facing indoors, and the directly expanded strong cool-heat radiation plate is fixed on the building surface by means of a bracket, a decorative face is provided on a side of the directly expanded strong cool-heat radiation plate exposed to the outside, a packed layer with an enclosed cavity structure is located between the decorative face and the directly expanded strong cool-heat radiation plate, the packed layer has a cavity structure with an enclosed space defined by the decorative face, the directly expanded strong cool-heat radiation plate and peripheral structures, a buffer plate, which is used for weakening the transfer effect of cool or heat quantity from the directly expanded strong cool-heat radiation plate to a room, is further provided in the packed layer between the decorative face and the directly expanded strong cool-heat radiation plate

Preferably, in the heat pump system, a protective condensation trough for receiving condensed water is provided below the directly expanded strong cool-heat radiation plate, and is provided therein with a condensate outlet.

Compared with the air-conditioner in the prior art, since the heat pump system of the present application adopts the directly expanded strong cool-heat radiation plate as the terminal of the main heat pump system, refrigerant in the main heat pump system may exchange heat with air by means of the directly expanded strong cool-heat radiation plate directly, instead of secondary heat exchange of the refrigerant loop and the water circulation loop, thereby reducing loss in intermediate heat exchange, improving the heat exchange efficiency and heat utilization, and omitting the circulating pump for water circulation so as to lower energy consumption and simplify the installation.

The present application further discloses an air-conditioner, including a chassis, and the heat pump system according to any one of the above technical solutions. The main heat pump system of the heat pump system is provided in the chassis.

Preferably, the air-conditioner further includes a replacement air heat pump system provided in the chassis, and a replacement air outlet of the replacement air heat pump system is adapted to be connected to an indoor replacement air intake

Preferably, in the air-conditioner, an air heat exchanger is provided between the main heat pump system and the replacement air heat pump system, wherein a first replacement air outlet of the air heat exchanger is connected to a replacement air intake of the replacement air heat pump system, a first return eduction air outlet of the air heat exchanger is connected to a heat source side air intake of the replacement air heat pump system, a second replacement air outlet of the air heat exchanger is connected to a replacement air intake of the main heat pump system, a second return eduction air outlet of the air heat exchanger is connected to a heat source side air intake of the main heat pump system, a return air intake of the air heat exchanger is connected to
a return eduction air outlet of the room.

Preferably, in the air-conditioner, a multistage air filter is provided at a replacement air intake of the air heat exchanger.

Preferably, in the air-conditioner, the return air intake of the air heat exchanger is also connected to a return air pipe arranged in the room.

A secondary heat exchange of the refrigerant loop and the water circulation loop is needless, thereby reducing loss in intermediate heat exchange, improving the heat exchange efficiency and heat utilization, and omitting the circulating pump for water circulation so as to lower energy consumption and simplify the installation. In the event that the heat pump system has the above technical effects, the air-conditioner with the heat pump system also has the corresponding technical effects.

### BRIEF DESCRIPTION OF THE DRAWINGS

To illustrate embodiments of the present application or the technical solution in the prior art more clearly, drawings used in description of the embodiments or the prior art will be described briefly below. Obviously, the drawings described below are only directed to some of the embodiments of the application, and the person skilled in the art may achieve other drawings according to such drawings without creative efforts.
Figure 1 is a schematic view of a heat pump system according to the invention:
Figures 2 to 6 are schematic views of an air-conditioner according to the invention;
Figures 7 to 10 are schematic views showing the installation of a directly expanded strong cool-heat radiation plate according to the invention; and
Figure 11 is a schematic structural view of a directly expanded strong cool-heat radiation plate according to the invention.

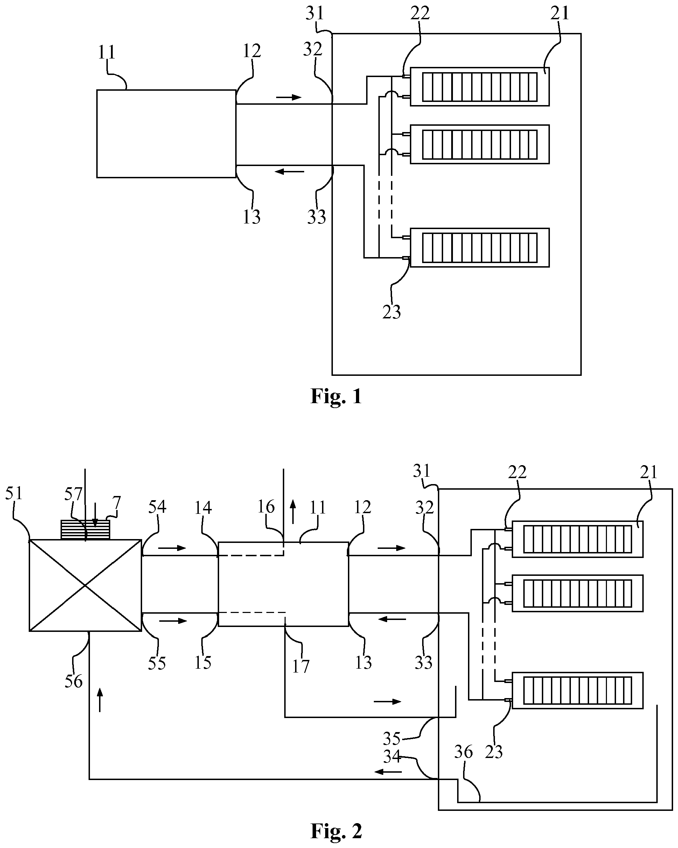

**Reference numerals in figures 1 to 11:**

| | | | |
|---|---|---|---|
| 11. | main heat pump system | 12. | working medium outlet |
| 13. | working medium return intake | 14. | heat source side air intake |
| 15. | replacement air intake | 16. | eduction air outlet |
| 17. | replacement air outlet | | |
| 21. | directly expanded strong cool-heat radiation plate | | |
| 22. | working medium inlet | 23. | working medium outlet |
| 31. | room | 32. | installation port |
| 33. | installation port | 34. | return air outlet |
| 35. | replacement air intake | 36. | return air pipe |
| 40. | condensate outlet | 41. | building surface |
| 42. | decorative face | 43. | bracket |
| 44. | bracket | 45. | packed layer |
| 46. | buffer plate | 47. | heat retaining layer |
| 48. | supporter | 49. | protective condensation trough |
| 51. | air heat exchanger | 52. | first return air outlet |
| 53. | first replacement air outlet | 54. | second return air outlet |
| 55. | second replacement air outlet | 56. | return air intake |
| 57. | replacement air intake | 61. | replacement air heat pump system |
| 62. | eduction air outlet | 63. | replacement air outlet |
| 64. | replacement air intake | 65. | heat source side air intake |
| 7. | multistage air filter | | |

### DETAILED DESCRIPTION

Hereinafter, the embodiments will be described in conjunction with the drawings. Furthermore, the embodiments illustrated below have no any limitation to inventive contents recited in claims, and are not necessary in its entirety for solutions of inventions defined in the claims.

There are provided in the present application a heat pump system and an air-conditioner which may reduce energy consumption of the air conditioner.

Referring to figure 1, it is a schematic view of a heat pump system according to an embodiment of the present application.

The heat pump system includes a main heat pump system 11, and a directly expanded strong cool-heat radiation plate 21 provided on the surface of the building and serving as the terminal of the main heat pump system 11. The interior of the directly expanded strong cool-heat radiation plate 21 enables the circulation of refrigerant in the main heat pump system 11.

For the purpose of saving energy further, as shown in figure 2, an air heat exchanger 51 is provided on the main heat pump system 11. Specifically, a return air intake 56 of the air heat exchanger 51 communicates with a return air outlet 34 of a room 31; a second return air outlet 54 of the air heat exchanger 51 is connected to a heat source side air intake 14 of the main heat pump system 11; a second replacement air outlet 55 of the air heat exchanger 51 communicates with a replacement air intake 15 of the main heat pump system 11; and a replacement air outlet 17 of the main heat pump system 11 communicates with a replacement air intake 35 of the room 31.

A multistage air filter 7 is further provided at a replacement air intake 57 of the air heat exchanger 51 in order to purify air.

When the main heat pump system 11 is running, the working medium in the main heat pump system 11 flows through a working medium feeding pipe into the directly expanded strong cool-heat radiation plate 21 arranged in the room 31. The working medium is evaporated as a result of absorbing heat from the room 31 so as to radiate cooling quantity (or condensed as a result of releasing heat into the room 31 so as to radiate heating quantity), and then returns to the main heat pump system 11 through a working medium discharging pipe. At the same time, outdoor fresh air flows into the air heat exchanger 51 via the multistage air filter 7, and makes primary heat exchange with the return air from the room 31 so as to obtain primary pre-cooled and filtered replacement air (or pre-heated and filtered replacement air). Then, the primary pre-cooled and filtered replacement air flows into the main heat pump system 11 to be secondarily pre-cooled and dehumidified (or preheated and humidified) so as to form the replacement air which will be supplied into the room 31. Return air undergoing primary heat recovery flows through a heat source side air intake 14 into the main heat pump system 11, and return air undergoing secondary full heat recovery is discharged from an eduction air outlet 16 of the main heat pump system 11.

In order to improve the comfortable feeling in the room, a return air intake 56 of the air heat exchanger 51 is also connected to a return air pipe 36 disposed in the room 31. The return air pipe 36 passes through a return air outlet 34 of the room 31. The provision of the return air pipe 36 may avoid the replacement air from short circuit, and improve indoor air quality.

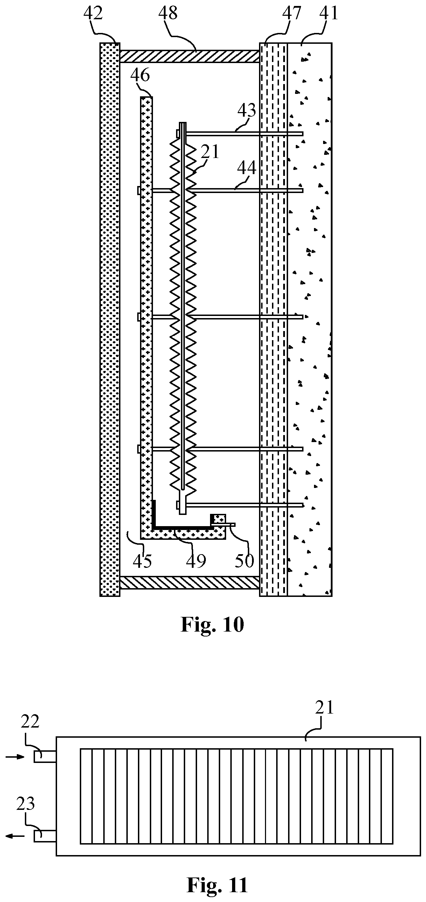

Referring to figures 7 to 11, figures 7 to 10 are schematic views showing the installation of a directly expanded strong cool-heat radiation plate 21 according to embodiments of the present application; and figure 11 is a schematic structural view of a directly expanded strong cool-heat radiation plate 21 according to an embodiment of the present application.

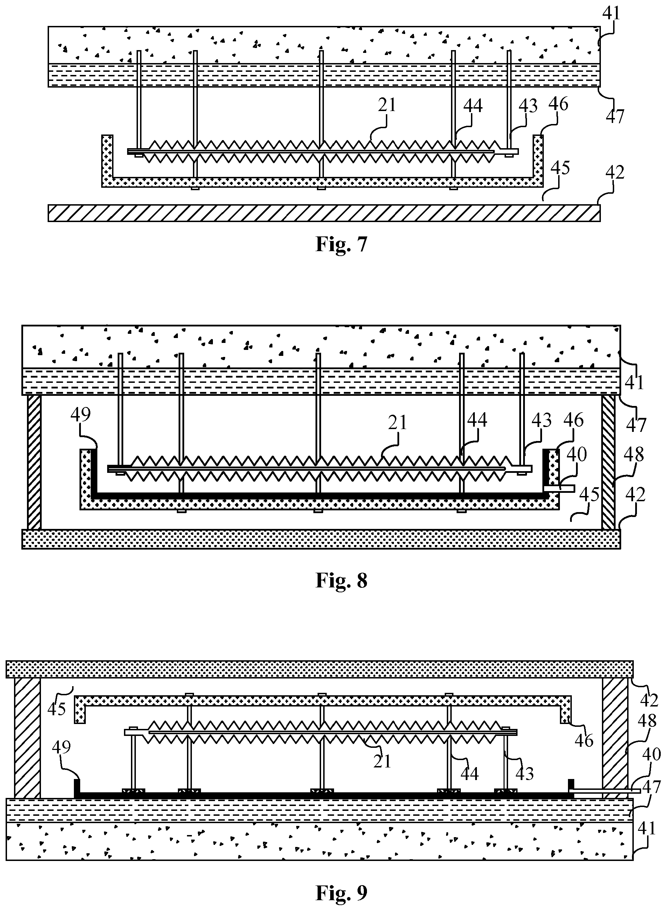

In order to reduce the loss of cool or heat quantity, a heat retaining layer 47 is provided on a building surface 41. The directly expanded strong cool-heat radiation plate 21 is fixed to the building surface 41 by means of a bracket 43. In order to reduce the dissipation of cool or heat quantity, a reflecting layer is provided on the outside surface of the heat retaining layer 47 which faces towards the interior of the room 31. The provision of the reflecting layer may transfer cool quantity (or heat quantity) radiated from the directly expanded strong cool-heat radiation plate 21 to the room 31 more efficiently. When the directly expanded strong cool-heat radiation plate 21 is provided on a different building surface 41, the bracket 43 may be varied. When the building surface 41 is a ceiling surface, as shown in figures 7 and 8, the bracket 43 may be of a flexible construction or a rigid construction; when the building surface 41 is a ground surface, as shown in figure 9, in order to ensure an appropriate space for installing a buffer plate 46 with respect to the directly expanded strong cool-heat radiation plate 21, and to ensure the thickness of a packed layer 45 and a firm supported decorative face 42, the bracket 43 is preferably of a rigid construction; and when the building surface 41 is a vertical surface, as shown in figure 10, similarly, in order to ensure an appropriate space for installing a buffer plate 46 with respect to the directly expanded strong cool-heat radiation plate 21, and to ensure the thickness of a packed layer 45 and a firm supported decorative face 42, the bracket 43 is preferably of a rigid construction.

To ensure the aesthetic appearance of the room 31 after the directly expanded strong cool-heat radiation plate 21 is mounted, the decorative face 42 is provided on the side of the directly expanded strong cool-heat radiation plate 21 which is exposed to the outside, and the packed layer 45 with closed cavity structure is located between the decorative face 42 and the directly expanded strong cool-heat radiation plate 21. The decorative face 42 has different name depending on the different building surface 41. When the building surface 41 is a ceiling surface, the decorative face 42 is the ceiling or any face with ornamental effect. When the building surface 41 is a ground surface, the decorative face 42 is a floor, and specifically, the floor could be lithoid floor, tile floor, metal floor, or wooden floor, etc. When the building surface 41 is a vertical surface, the decorative face 42 is a false wall layer with ornamental effect.

The packed layer 45 has a cavity structure with an enclosed space defined by the decorative face 42, the directly expanded strong cool-heat radiation plate 21 and peripheral structures. Since the packed layer 45 is located between the decorative face 42 and the directly expanded strong cool-heat radiation plate 21, it is possible to relieve the occurrence of moisture condensation because of local overcooling or the occurrence of overheating of the directly expanded strong cool-heat radiation plate 21 effectively in the cold or heat radiating process. The temperature of the decorative face 42 is more uniform. The comfortable feeling in the room 31 is thus improved.

In order to further relieve the occurrence of moisture condensation because of local overcooling or the occurrence of overheating, the buffer plate 46 is located between the packed layer 45 and the directly expanded strong cool-heat radiation plate 21. The buffer plate 46 is fixed to the building surface 41 by means of a bracket 44. The provision of the buffer plate 46 could weaken the transfer effect of cool or heat quantity from the directly expanded strong cool-heat radiation plate 21 to the room 31. When the main heat pump system performs refrigerating (or heating), the directly expanded strong cool-heat radiation plate 21 achieves secondary heat radiation under the combined effect of the buffer plate 46 and the packed layer 45, so that the temperature of the decorative face 42 further tends to be uniform. The comfortable feeling in the room 31 is thus improved further.

In a further technical solution, in order to prevent damage to inner parts because of moisture condensation in enclosed space of assembly of the directly expanded strong cool-heat radiation plate 21, an protective condensation trough 49 for receiving condensed water is provided below the directly expanded strong cool-heat radiation plate 21, and is provided therein with a condensate outlet 40. When the moisture condensation of the directly expanded strong cool-heat radiation plate 21 occurs, it will be collected in the protective condensation trough 49, and drains via the condensate outlet 40 through a preset pipeline. As shown in figure 8, when the building surface 41 is a ceiling surface, the protective condensation trough 49 is provided on the buffer plate 46 entirely; as shown in figure 9, when the building surface 41 is a ground surface, the protective condensation trough 49 is provided on the heat retaining layer 47 entirely; and as shown in figure 10, when the building surface 41 is a vertical surface, the protective condensation trough 49 is provided at the lower portion of the buffer plate 46.

Since heat exchange efficiency of the heat pump system with the above structure is higher and the energy consumption is lower, when the directly expanded strong cool-heat radiation plate 21 of the heat pump system is mounted on the building surface 41, construction and layout may be performed on a small area of the building surface 41, rather than the whole building surface 41. In order to achieve the sufficient strength, a supporter 48 adapted for supporting the decorative face 42 is provided between the decorative face 42 and the building surface 41. Specifically, the supporters 48 may be arranged around the directly expanded strong cool-heat radiation plate 21, so as to separate the building surface 41 with the directly expanded strong cool-heat radiation plate 21 thereon from the building surface 41 without the directly expanded strong cool-heat radiation plate 21 thereon.

As shown in figure 11, the directly expanded strong cool-heat radiation plate 21 may include various effective heat transfer structures in which a refrigerant pipeline (copper pipe, aluminum pipe, etc.) and a fixed pipeline may be formed with the radiating surfaces. The radiating surfaces may be a metal plate or a surface cooler, etc. The directly expanded strong cool-heat radiation plate 21 may also be of a platy structure with various refrigerant cavity which may transfer heat effectively. The refrigerant in the main heat pump system 11 may be circulated in the plate, and a working medium inlet 22 and a working medium outlet 23 are provided in the directly expanded strong cool-heat radiation plate 21. The directly expanded strong cool-heat radiation plate 21 may be a single piece or multiple pieces. In case of multiple pieces, a plurality of the directly expanded strong cool-heat radiation plate 21 are interconnected in series or in parallel.

Because the directly expanded strong cool-heat radiation plate 21 in the air-conditioner disclosed in the embodiments of the application exchanges heat with the room 31 directly, the intensity of the cooling and heating radiation is large, and the directly expanded strong cool-heat radiation plate 21 is mounted on a reduced area with ease. It is possible to ensure the cooling and heating quantity needed for comfortable feeling in the room 31, reduce the area of the room 31 for radiation, and have no effect on the use of space of the room 31.

An air-conditioner is further disclosed in an embodiment of the present application. As shown in figures 1 to 6, the air-conditioner includes a chassis (not marked in the figures), and the main heat pump system 11 of the heat pump system in the above any solution is provided in the chassis. The working medium outlet 12 of the main heat pump system 11 communicates with the working medium inlet 22 of the directly expanded strong cool-heat radiation plate 21 via a working medium feeding pipe, and the working medium feeding pipe extends through an installation port 32 of the room 31. A working medium return intake 13 of the main heat pump system 11 communicates with the working medium outlet 23 of the directly expanded strong cool-heat radiation plate 21 via a working medium return pipe, and the working medium return pipe extends through the installation port 33 of the room 31. The installation port 32 and the installation port 33 may be the same installation port.

Because the directly expanded strong cool-heat radiation plate 21 and the main heat pump system 11 are combined in the air-conditioner with the above heat pump system, the refrigerant in the main heat pump system 11 exchanges heat via the directly expanded strong cool-heat radiation plate 21 directly, instead of secondary heat exchange of the refrigerant loop and the water circulation loop, thereby reducing loss in intermediate heat exchange, improving the heat exchange efficiency and heat utilization, and omitting the circulating pump for water circulation so as to lower energy consumption and simplify the installation.

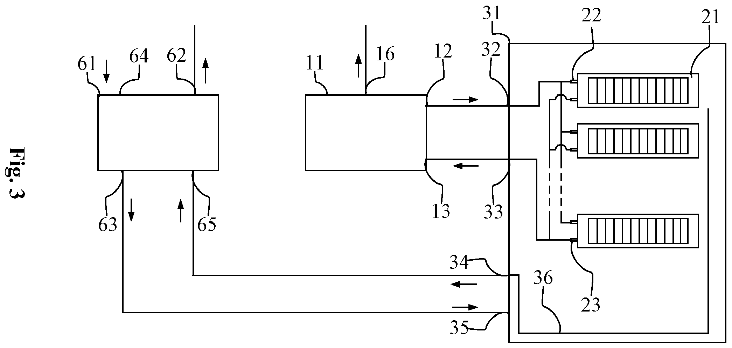

The main heat pump system may undertake both sensible heat load (radiation heat transfer) and latent heat load (replacement air pre-cooled dehumidification or preheated humidification) in the room 31. In order to further ensure the quality of the air and comfort in the room 31, as shown in figure 3, a replacement air heat pump system 61 is provided in the chassis of the air-conditioner. A replacement air outlet 63 of the replacement air heat pump system 61 is adapted to be connected to the replacement air intake 35 of the room 31. If the room 31 is kept in a good temperature condition, or the sensible heat load is low, the main heat pump system 11 may be intermittently operated generally. In this case, when the main heat pump system 11 is stopped, the replacement air heat pump system 61 in the embodiment of the present application may filter pre-cooled dehumidified replacement air or may preheat (humidify) the replacement air such as to meet the desired humidity and quality.

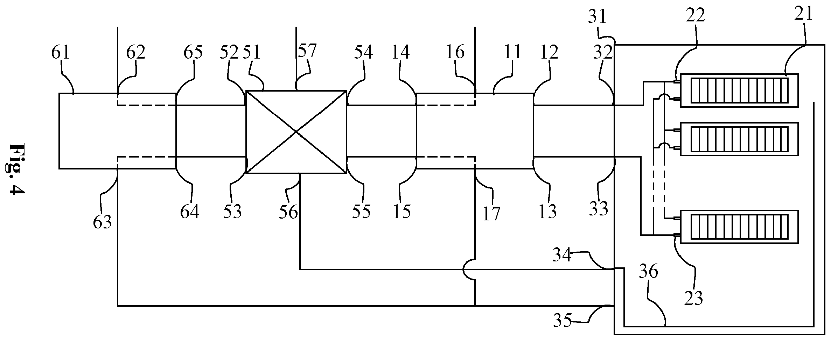

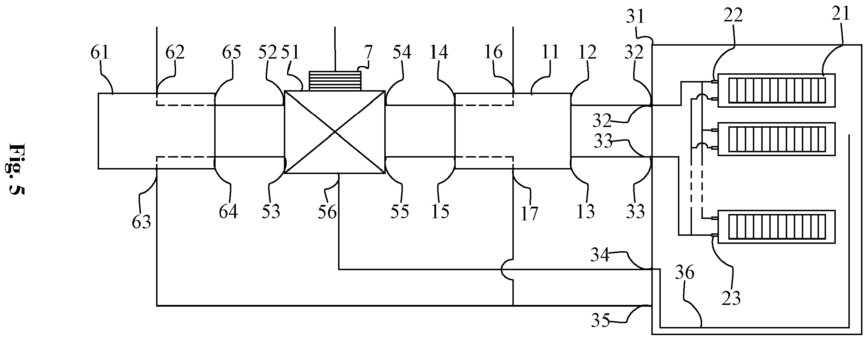

In order to reduce the energy consumption, as shown in figure 4, the air heat exchanger 51 is arranged between the main heat pump system 11 and the replacement air heat pump system 61. A first replacement air outlet 53 of the air heat exchanger 51 is connected to a replacement air intake 64 of the replacement air heat pump system 61; a first return eduction air outlet 52 of the air heat exchanger 51 is connected to a heat source side air intake 65 of the replacement air heat pump system 61; the second replacement air outlet 55 of the air heat exchanger 51 is connected to the replacement air intake 15 of the main heat pump system 11; the second return eduction air outlet 54 of the air heat exchanger 51 is connected to the heat source side air intake 14 of the main heat pump system 11; the return air intake 56 of the air heat exchanger 51 is connected to the return eduction air outlet 34 of the room 31; and the replacement air outlet 63 of the replacement air heat pump system 61 communicates with the replacement air intake 35 of the room 31. As shown in figures 5 to 6 in conjunction with figure 4, a multistage air filter 7 is provided at a replacement air intake 57 of the air heat exchanger 51 in order to improve the quality of the replacement air flowing into the room 31.

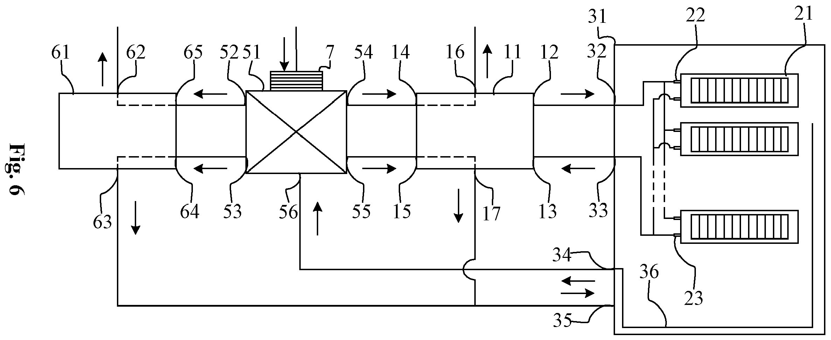

As shown in figure 6, when the replacement air heat pump system 61 and the main heat pump system 11 are both running, working medium in the main heat pump system 11 flows through a working medium feeding pipe into the directly expanded strong cool-heat radiation plate 21 in the room 31. The working medium is evaporated as a result of absorbing heat from the room 31 so as to radiate cooling quantity (or condensed as a result of releasing heat into the room 31 so as to radiate heating quantity), and then returns to the main heat pump system 11 through a working medium discharging pipe. At the same time, outdoor fresh air flows into the air heat exchanger 51 via the multistage air filter 7, and makes primary heat exchange with the return air from the room 31 so as to obtain primary pre-cooled (or pre-heated) and filtered replacement air, a part of which flows into the replacement air heat pump system 61, and the other part of which flows into the main heat pump system 11 to be secondarily pre-cooled and dehumidified (or preheated and humidified) so as to form the replacement air which will be supplied into the room 31. A part of return air undergoing primary heat recovery flows into a heat source side air intake 65 of the replacement air heat pump system 61, and the other part of the return air flows through a heat source side air intake 14 into the main heat pump system 11, and is discharged from the eduction air outlet 16 of the main heat pump system 11 and the eduction air outlet 62 of the replacement air heat pump system 61 after secondary full heat recovery is performed.

For the above air-conditioner, only the directly expanded strong cool-heat radiation plate 21, the replacement air intake 35, the return eduction air outlet 34, and the return air pipe 36 need to be arranged in the room 31. The temperature in the room 31 is uniform, without the blown feeling and the noise of the apparatus. In addition, with the replacement air heat pump system 61, the conditioned air in the room 31 is fresh, has stable humidity and clean environment, thereby greatly improving the comfort in the room. Also, such an facility is easy to be installed, and may achieve a strong cooling radiation with a large temperature difference without moisture condensation, nor a strong heating radiation with a large temperature difference without dry and hot feeling, and may have a power of the facility reducing more than fifty percent than the conventional air-conditioner. The use of the air heat exchanger 51 enables an efficient full cool-heat recovery in the replacement air system, a simple structure, small volume, and a low cost.

## Claims

1. A heat pump system, comprising:
a main heat pump system (11); and
a directly expanded strong cool-heat radiation plate (21) provided on a building surface (41) and serving as the terminal of the main heat pump system (11);
wherein the directly expanded strong cool-heat radiation plate (21) is configured to allow refrigerant in the main heat pump system (11) to circulate therein,
wherein the directly expanded strong cool-heat radiation plate (21) comprises multiple pieces, the multiple pieces of the directly expanded strong cool-heat radiation plate (21) are interconnected in series or in parallel,
wherein a heat retaining layer (47) and a reflecting layer are provided on the building surface (41), and wherein the reflecting layer is provided on an outside surface of the heat retaining layer (47) facing indoors, and the directly expanded strong cool-heat radiation plate (21) is fixed on the building surface (41) by means of a bracket (43),
wherein a decorative face (42) is provided on a side of the directly expanded strong cool-heat radiation plate (21) exposed to the outside, a packed layer (45) with an enclosed cavity structure is located between the decorative face (42) and the directly expanded strong cool-heat radiation plate (21), the packed layer (45) has a cavity structure with an enclosed space defined by the decorative face (42), the directly expanded strong cool-heat radiation plate (21) and peripheral structures,
**characterized in that**
a buffer plate (46), which is used for weakening the transfer effect of cool or heat quantity from the directly expanded strong cool-heat radiation plate to a room, is further provided in the packed layer (45) between the decorative face (42) and the directly expanded strong cool-heat radiation plate (21).

2. The heat pump system according to claim 1, wherein a protective condensation trough (49) for receiving condensed water is provided below the directly expanded strong cool-heat radiation plate (21), and is provided therein with a condensate outlet (40).

3. An air-conditioner, comprising:
a chassis, and
the heat pump system according to any one of claim 1 to 2;
wherein the main heat pump system of the heat pump system is provided in the chassis.

4. The air-conditioner according to claim 3, further comprising:
a replacement air heat pump system (61) provided in the chassis, wherein a replacement air outlet (63) of the replacement air heat pump system (61) is adapted to be connected to an replacement air intake (35) of a room (31).

5. The air-conditioner according to claim 4, wherein an air heat exchanger (51) is provided between the main heat pump system (11) and the replacement air heat pump system (61), and wherein a first replacement air outlet (53) of the air heat exchanger (51) is connected to a replacement air intake (64) of the replacement air heat pump system (61), a first return eduction air outlet (52) of the air heat exchanger (51) is connected to a heat source side air intake (65) of the replacement air heat pump system (61), a second replacement air outlet (55) of the air heat exchanger (51) is connected to a replacement air intake (15) of the main heat pump system (52), a second return eduction air outlet (55) of the air heat exchanger (51) is connected to a heat source side air intake (14) of the main heat pump system (11), a return air intake (56) of the air heat exchanger (51) is connected to a return eduction air outlet (34) of the room (31).

6. The air-conditioner according to claim 5, wherein a multistage air filter (7) is provided at a replacement air intake (57) of the air heat exchanger (51).

7. The air-conditioner according to claim 6, wherein the return air intake (56) of the air heat exchanger (51) is also connected to a return air pipe (36) arranged in the room (31).

## Patentansprüche

1. Wärmepumpensystem, umfassend:
ein Hauptwärmepumpensystem (11); und
eine direkt expandierte starke Kühl-Wärme-Strahlungsplatte (21), die auf einer Gebäudeoberfläche (41) vorgesehen ist und als Anschluss des Hauptwärmepumpensystems (11) dient;
wobei die direkt expandierte Platte (21) mit starker Kühlwärmeabstrahlung so konfiguriert ist, dass sie Kältemittel in dem Hauptwärmepumpensystem (11) darin zirkulieren lässt,
wobei die direkt expandierte Platte (21) mit starker Kühlwärmestrahlung mehrere Stücke umfasst, die mehreren Teile der direkt expandierten, stark Kühl-wärmeabstrahlenden Platte (21) in Reihe oder parallel miteinander verbunden sind,
wobei eine wärmespeichernde Schicht (47) und eine reflektierende Schicht auf der Gebäudeoberfläche (41) vorgesehen sind, und wobei die reflektierende Schicht ist vorgesehen auf einer Außenfläche der wärmespeichernden Schicht (47), die dem Innenraum zugewandt ist, und die direkt expandierte, stark kühle Wärme abstrahlende Platte (21) ist an der Gebäudeoberfläche (41) mittels einer Klammer (43) befestigt,
wobei ein dekoratives Fläche (42) auf einer nach außen exponierten Seite der direkt ausgedehnten, stark kühl-wärmeabstrahlenden Platte (21) vorgesehen ist, eine gepackte Schicht (45) mit einer eingeschlossenen Hohlraumstruktur zwischen der dekorativen Fläche (42) und der direkt expandierte starke Kühl-Wärme-Strahlungsplatte-Strahlungsplatte (21), wobei die gepackte Schicht (45) eine Hohlraumstruktur mit einem umschlossenen Raum aufweist, der durch die dekorative Fläche (42), die direkt expandierte, stark Kälte-Wärme-Strahlungsplatte (21) und periphere Strukturen definiert ist,
**dadurch gekennzeichnet,**
**dass** eine Pufferplatte (46), die zum Abschwächen des Übertragungseffekts einer Kühl- oder Wärmemenge von der direkt expandierten, stark kühl-wärmeabstrahlenden Platte zu einem Raum verwendet wird, ferner in der gepackten Schicht (45) zwischen der dekorativen Fläche vorgesehen ist (42) und die direkt expandierte starke Kühl-Wärme-Strahlungsplatte (21).

2. Wärmepumpensystem nach Anspruch 1, wobei eine schützende Kondensatwanne (49) zum Aufnehmen von Kondenswasser unterhalb der direkt expandierten starken Kühlwärmeabstrahlplatte (21) vorgesehen ist und darin mit einem Kondensatauslass (40) versehen ist.

3. Klimaanlage, umfassend:
ein Chassis,
und das Wärmepumpensystem nach einem der Ansprüche 1 bis 2;
wobei das Hauptwärmepumpensystem des Wärmepumpensystems im Chassis vorgesehen ist.

4. Klimaanlage nach Anspruch 3, ferner umfassend:
ein Ersatzluft-Wärmepumpensystem (61), das in dem Chassis vorgesehen ist, wobei ein Ersatzluftauslass (63) des Ersatzluft-Wärmepumpensystems (61) geeignet ist, mit einem Ersatzlufteinlass (35) eines Raums (31) verbunden zu werden.

5. Klimaanlage nach Anspruch 4, wobei ein Luftwärmetauscher (51) zwischen dem Hauptwärmepumpensystem (11) und dem Ersatzluftwärmepumpensystem (61) vorgesehen ist, und wobei ein erster Ersatzluftauslass (53) des Luftwärmetauschers (51) mit einem Ersatzlufteinlass (64) des Ersatzluftwärmepumpensystems (61), einem ersten Rückführluftauslass (52) des Luftwärmetauschers (51) mit einem wärmequellenseitigen Lufteinlass (65) des Ersatzluft-Wärmepumpensystems (61) verbunden ist, ein zweiter Ersatzluftauslass (55) des Luftwärmetauschers (51) mit einem Ersatzlufteinlass (15) des Hauptwärmepumpensystems (52) ist ein zweiter Rückführluftauslass (55) des Luftwärmetauschers (51) mit einem wärmequellenseitiger Lufteinlass (14) des Hauptwärmepumpensystems (11) verbunden ist, ein Rücklufteinlass (56) des Luftwärmetauschers (51) ist mit einem Rückführungsluftauslass (34) des Raums (31) verbunden ist.

6. Klimaanlage nach Anspruch 5, **dadurch gekennzeichnet, dass** an einem Zulufteinlass (57) des Luftwärmetauschers (51) ein mehrstufiger Luftfilter (7) vorgesehen ist.

7. Klimaanlage nach Anspruch 6, **dadurch gekennzeichnet, dass** der Rücklufteinlass (56) des Luftwärmetauschers (51) auch mit einer im Raum (31) angeordneten Rückluftleitung (36) verbunden ist.

## Revendications

1. Système de pompe à chaleur, comprenant :
un système de pompe à chaleur principal (11); et
une plaque de rayonnement de chaleur froide intense directement expansée (21) disposée sur une surface de bâtiment (41) et servant de terminal du système de pompe à chaleur principal (11) ;
dans lequel la plaque de rayonnement de chaleur froide intense directement expansée (21) est configurée pour permettre au réfrigérant dans le système de pompe à chaleur principal (11) de circuler dans celui-ci,
dans lequel la plaque de rayonnement de chaleur froide intense directement expansée (21) comprend plusieurs parties, les plusieurs parties de la plaque de rayonnement de chaleur froide intense directement expansée (21) sont interconnectés en série ou en parallèle,
dans lequel une couche de rétention de chaleur (47) et une couche réfléchissante sont disposées sur la surface du bâtiment (41), et dans lequel la couche réfléchissante est disposée sur une surface extérieure de la couche de rétention de chaleur (47) faisant face à l'intérieur, et la plaque de rayonnement de chaleur froide intense directement expansée (21) est fixée sur la surface du bâtiment (41) au moyen d'un support (43),
dans lequel une face décorative (42) est prévue sur un côté de la plaque de rayonnement de chaleur froide intense directement expansée (21) exposée à l'extérieur, une couche garnie (45) avec une structure de cavité fermée est située entre la face décorative (42) et la face de la plaque de rayonnement de chaleur froide intense directement expansée (21), la couche garnie (45) a une structure de cavité avec un espace fermé défini par la face décorative (42), la plaque de rayonnement de chaleur froide intense directement expansée (21) et des structures périphériques,
**caractérisé en ce que**
une plaque tampon (46), qui est ut1 1isée pour affaiblir l'effet de transfert de la quantité de froid ou de chaleur de la plaque de rayonnement de chaleur froide intense directement expansée vers une pièce est en outre prévue dans la couche garnie (45) entre la face décorative (42) et la plaque de rayonnement de chaleur froide intense directement expansée (21).

2. Système de pompe à chaleur selon la revendication 1, dans lequel un bac de protection contre la condensation (49) pour recevoir l'eau condensée est prévu sous la plaque de rayonnement de chaleur froide intense directement expansée (21), et est pourvu à l'intérieur d'une sortie de condensat (40).

3. Un climatiseur, comprenant :
un châssis, et le système de pompe à chaleur selon l'une quelconque des revendications 1 à 2 ; dans lequel le système de pompe à chaleur principal du système de pompe à chaleur est prévu dans le châssis.

4. Climatiseur selon la revendication 3, comprenant en outre :
un système de pompe à chaleur à air de remplacement (61) prévu dans le châssis, dans lequel une sortie d'air de remplacement (63) du système de pompe à chaleur à air de remplacement (61) est adaptée pour être connectée à une prise d'air de remplacement (35) d'une pièce (31 ).

5. Climatiseur selon la revendication 4, dans lequel un échangeur de chaleur à air (51) est prévu entre le système de pompe à chaleur principal (11) et le système de pompe à chaleur à air de remplacement (61), et dans lequel une première sortie d'air de remplacement (53) de l'échangeur de chaleur à air (51) est reliée à une entrée d'air de remplacement (64) du système de pompe à chaleur à air de remplacement (61), une première sortie d'air d'extraction de retour (52) de l'échangeur de chaleur à air (51) est reliée à une prise d'air côté source de chaleur (65) du système de pompe à chaleur à air de remplacement (61), une deuxième sortie d'air de remplacement (55) de l'échangeur de chaleur à air (51) est reliée à une prise d'air de remplacement (15) du système principal de pompe à chaleur (52), une deuxième sortie d'air d'éduction de retour (55) de l'échangeur de chaleur à air (51) est reliée à un prise d'air côté source de chaleur (14) du système de pompe à chaleur principal (11), une prise d'air de retour (56) de l'échangeur de chaleur à air (51) est relié à une sortie d'air d'éduction de retour (34) de la pièce (31).

6. Climatiseur selon la revendication 5, dans lequel un filtre à air à plusieurs étages (7) est prévu au niveau d'une entrée d'air de remplacement (57) de l'échangeur de chaleur à air (51).

7. Climatiseur selon la revendication 6, dans lequel l'entrée d'air de retour (56) de l'échangeur de chaleur à air (51) est également reliée à une conduite d'air de retour (36) disposée dans la pièce (31).
